# EUROPEAN PATENT APPLICATION

(11) **EP 4 589 517 A1**
(43) Date of publication of application: **23.07.2025**
(21) Application number: 23864644.2
(22) Date of filing: 08.09.2023
(51) Int. Cl.: G06Q 30/02, G06N 3/04

(54) **DATA PROCESSING METHOD, MODEL TRAINING METHOD, AND ELECTRONIC DEVICE**

(30) Priority: 14.09.2022 CN 202211117464
(71) Applicant: BEIJING YOUZHUJU NETWORK TECHNOLOGY CO. LTD., Beijing 101299 (CN); Lemon Inc., Grand Cayman, KY1-1205 (KY)
(72) Inventor: ZHOU, Xiaosong, Beijing 100028 (CN); CHEN, Shu, Beijing 100028 (CN); CAI, Qingliang, Beijing 100028 (CN); WANG, Zhe, Los Angeles, California 90066 (US); HE, Haiqian, Singapore 018960 (SG)
(74) Representative: Dentons UK and Middle East LLP
(86) International application number: PCT/CN2023/117748
(87) International publication number: WO 2024/055912

(57) **Abstract**

The present disclosure relates to a data processing method and apparatus, a model training method and apparatus, an electronic device, a computer-readable storage medium, and a computer program product. The method includes: obtaining a pre-generated multi-domain network model, where the multi-domain network model includes an underlying module, a center branch, and a plurality of domain branches corresponding to a plurality of domains; determining a concatenated feature of to-be-processed media data by inputting the to-be-processed media data into the underlying module; obtaining a first output by inputting the concatenated feature into the center branch; obtaining a second output by inputting the concatenated feature into a domain branch corresponding to a domain to which the to-be-processed media data belongs; and determining a prediction result based on the first output and the second output, where the prediction result includes a CTR and/or a CVR. In this way, the CTR/CVR can be predicted and obtained by using the multi-domain network model, a global perspective can be considered, and the to-be-processed media data only needs to go through a corresponding domain branch, which is more targeted and reduces the amount of calculation for processing. In this way, the CTR/CVR can be determined more accurately and efficiently.

## Description

### CROSS-REFERENCE TO RELATED APPLICATION(S)

The present application claims priority to Chinese Patent Application No. 202211117464.1, filed with the China National Intellectual Property Administration on September 14, 2022 and entitled "DATA PROCESSING METHOD, MODEL TRAINING METHOD, AND ELECTRONIC DEVICE", which is incorporated herein by reference in its entirety.

### FIELD

The present disclosure relates generally to the field of computers, and in particular, to a data processing method, a model training method, and an electronic device.

### BACKGROUND

Click-through rate (CTR) and/or conversion rate (CVR) are some important indicators of a media information system. Therefore, if the CTR and/or the CVR can be determined more accurately, an important reference can be provided for a provider of media information.

Various different media information such as product information and advertisement information may involve different scenarios. Due to differences between different scenarios, if the CTR and/or the CVR are determined in the same manner, the obtained result will not be accurate enough.

### SUMMARY

According to example embodiments of the present disclosure, a data processing solution based on a multi-domain network model is provided.

In a first aspect of the present disclosure, a data processing method is provided. The method includes: obtaining a pre-generated multi-domain network model, where the multi-domain network model includes an underlying module, a center branch, and a plurality of domain branches corresponding to a plurality of domains; determining a concatenated feature of to-be-processed media data by inputting the to-be-processed media data into the underlying module; obtaining a first output by inputting the concatenated feature into the center branch; obtaining a second output by inputting the concatenated feature into a domain branch corresponding to a domain to which the to-be-processed media data belongs; and determining a prediction result of the to-be-processed media data based on the first output and the second output, where the prediction result includes a CTR and/or a CVR.

In a second aspect of the present disclosure, a model training method is provided. The method includes: obtaining a media information dataset for training, where the dataset includes a plurality of samples, each of the plurality of samples includes a media data sample and a corresponding label, and the label indicates a CTR and/or a CVR; for each sample in the dataset: determining a concatenated feature of the sample by inputting the sample into an underlying module of a multi-domain network model, obtaining a first output by inputting the concatenated feature of the sample into a center branch of the multi-domain network model, obtaining a second output by inputting the concatenated feature of the sample into a domain branch corresponding to a domain to which the sample belongs, and determining a network output of the sample based on the first output and the second output; and generating the multi-domain network model through training based on the label of each sample in the dataset and the network output of each sample, where the multi-domain network model includes the underlying module, the center branch, and the plurality of domain branches corresponding to the plurality of domains.

In a third aspect of the present disclosure, an electronic device is provided. The electronic device includes: at least one processing unit; and at least one memory coupled to the at least one processing unit and storing instructions executable by the at least one processing unit, where the instructions, when executed by the at least one processing unit, cause the electronic device to perform the method described in accordance with the first aspect or the second aspect of the present disclosure.

In a fourth aspect of the present disclosure, a computer-readable storage medium is provided. The computer-readable storage medium has stored thereon machine-executable instructions that, when executed by a device, cause the device to perform the method described in accordance with the first aspect or the second aspect of the present disclosure.

In a fifth aspect of the present disclosure, a computer program product is provided. The computer program product includes computer-executable instructions, where the computer-executable instructions, when executed by a processor, implement the method described in accordance with the first aspect or the second aspect of the present disclosure.

In a sixth aspect of the present disclosure, an electronic device is provided. The electronic device includes: a processing circuit configured to perform the method described in accordance with the first aspect or the second aspect of the present disclosure.

The Summary is to introduce a series of concepts in a simplified form, which will be further described in the Detailed Description below. The Summary is neither intended to identify key features or necessary features of the present disclosure, nor is it intended to limit the scope of the present disclosure. Other features of the present disclosure will be readily comprehensible through the following description.

### BRIEF DESCRIPTION OF THE DRAWINGS

The above and other features, advantages, and aspects of the embodiments of the present disclosure become more apparent with reference to the following detailed description and in conjunction with the accompanying drawings. In the drawings, the same or similar reference numerals denote the same or similar elements, where:
FIG. 1 shows a schematic flowchart of a process of model training according to some embodiments of the present disclosure;
FIG. 2 shows a schematic diagram of multi-domain splitting according to some embodiments of the present disclosure;
FIG. 3 shows a schematic diagram of a model architecture according to some embodiments of the present disclosure;
FIG. 4 shows a schematic flowchart of a process of data processing according to some embodiments of the present disclosure;
FIG. 5 shows a block diagram of an example training apparatus according to some embodiments of the present disclosure;
FIG. 6 shows a block diagram of an example use apparatus according to some embodiments of the present disclosure; and
FIG. 7 shows a block diagram of an example device that can be used to implement the embodiments of the present disclosure.

### DETAILED DESCRIPTION OF EMBODIMENTS

Embodiments of the present disclosure are described in more detail below with reference to the accompanying drawings. Although some embodiments of the present disclosure are shown in the drawings, it would be appreciated that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

In the embodiments of the present disclosure, different scenarios may also be referred to as different domains, different fields, or other names, etc. Exemplarily, different scenarios may include, but are not limited to, different access methods, different advertisement types, different regions, different conversion events, and so on.

For media information including a plurality of scenarios or a plurality of domains (multi-domain), different scenarios may have different data distributions, etc. If a CTR and/or a CVR of media information of the plurality of scenarios are simply determined by using one model, it can be understood that there will be differences in the modeling effect for the plurality of different scenarios, resulting in inaccurate determined results.

If different models are used for different scenarios, data isolation between the scenarios may be caused. Although each model may be finely fitted, the separate processing of each model will increase labor costs, and due to sample balancing problems of each scenario, the number of samples in some scenarios is too small, resulting in an unstable model. In fact, data isolation between different scenarios will abandon some sample information from a global perspective, and each model is independent of each other, resulting in the lack of global perspective information in each model, making the obtained result inaccurate.

In view of this, the embodiments of the present disclosure provide a data processing solution based on a multi-domain network model. In this solution, a domain branch corresponding to a domain can be more targeted, and a center branch can avoid complete isolation between different domain branches, so that the differences between different domains can be fully considered, and at the same time, a global perspective can be considered, thereby obtaining a more accurate result.

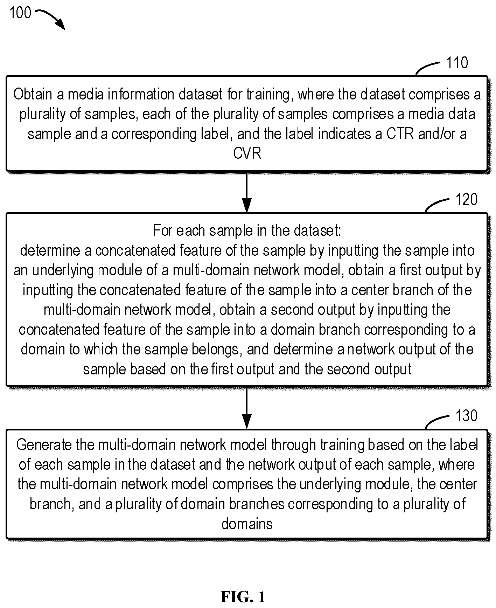

FIG. 1 shows a schematic flowchart of a process 100 of model training according to some embodiments of the present disclosure. At block 110, a media information dataset for training is obtained, where the dataset includes a plurality of samples, each of the plurality of samples includes a media data sample and a corresponding label, and the label indicates a CTR and/or a CVR. At block 120, for each sample in the dataset: a concatenated feature of the sample is determined by inputting the sample into an underlying module of a multi-domain network model, a first output is obtained by inputting the concatenated feature of the sample into a center branch of the multi-domain network model, a second output is obtained by inputting the concatenated feature of the sample into a domain branch corresponding to a domain to which the sample belongs, and a network output of the sample is determined based on the first output and the second output. At block 130, the multi-domain network model is generated through training based on the label of each sample in the dataset and the network output of each sample, where the multi-domain network model includes the underlying module, the center branch, and a plurality of domain branches corresponding to a plurality of domains.

In some embodiments, the plurality of domains may be predefined, and the domain to which each sample belongs is determined. Exemplarily, a domain division manner may be determined based on a posterior information, e.g., a difference between posterior CTRs/CVRs.

For example, assuming that the media information is an advertisement slot, a posterior CTR/CVR difference between different scenarios may be analyzed based on an application scenario of the advertisement slot, to determine a domain splitting manner. For example, the determined splitting manner may be: (1) if a type of the advertisement slot belongs to "banner advertisement, interstitial advertisement, splash screen advertisement, or information flow advertisement", the advertisement slot belongs to a first domain; (2) if the type of the advertisement slot belongs to "incentive video or full-screen video", and an access method is a "software development kit (SDK)", the advertisement slot belongs to a second domain; and (3) if the type of the advertisement slot belongs to "incentive video or full-screen video", and the access method is a "demand-side platform (DSP)", the advertisement slot belongs to a third domain.

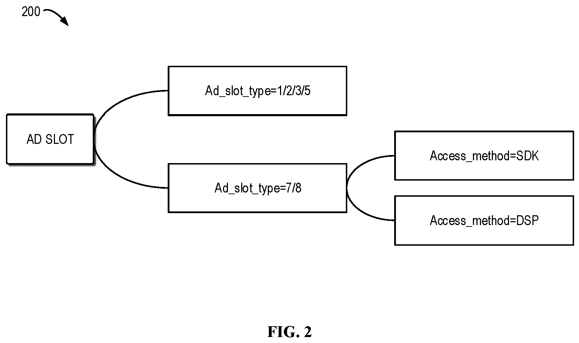

FIG. 2 shows a schematic diagram of multi-domain splitting 200 according to some embodiments of the present disclosure. It is assumed that types of advertisement slots (Ad_slot_type) are identified as shown in Table 1 below, and it is assumed that an access method (Access_method) includes an SDK and a DSP.

**Table 1**

| **Advertisement slot type** | **Identifier** |
|---|---|
| Banner advertisement | 1 |
| Interstitial advertisement | 2 |
| Splash screen advertisement | 3 |
| Information flow advertisement | 5 |
| Incentive video | 7 |
| Full-screen video | 8 |

It should be noted that the foregoing example and the splitting manner of FIG. 2 are only schematic, and in an actual scenario, a specific splitting manner may be determined based on a posterior information. For other media information, etc., a corresponding splitting manner may be determined, which will not be described in detail here.

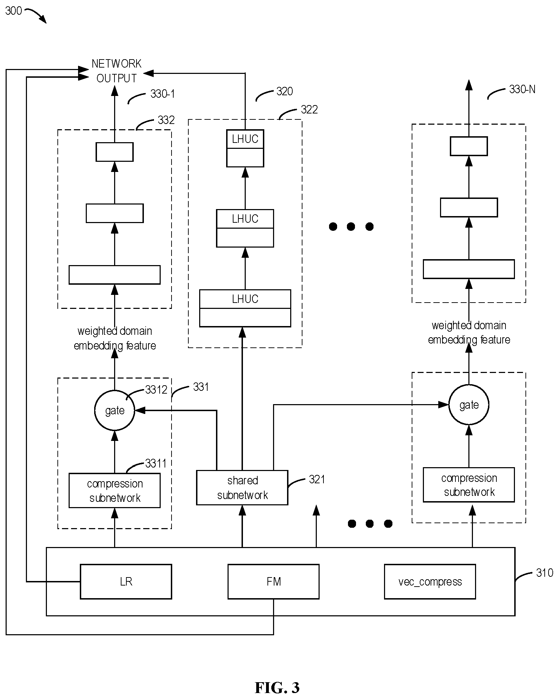

FIG. 3 shows a schematic diagram of a model architecture 300 according to some embodiments of the present disclosure. As shown in FIG. 3, the model 300 includes an underlying module 310, a center branch 320, and a plurality of domain branches 330-1 to 330-N (collectively or individually referred to as a domain branch 330) corresponding to a plurality of domains, where N represents a number of the plurality of domains.

Referring to FIG. 3, the underlying module 310 may include a plurality of submodules, for example, including a logistic regression (LR) submodule 311, a factorization machine (FM) submodule 312, and a vector compression (vec_compress) submodule 313. It can be understood that the illustration shown in FIG. 3 is only schematic, and should not be construed as a limitation to the embodiments of the present disclosure. For example, the underlying module 310 may further include other submodules not shown in the figure, for example, the vector compression submodule 313 may also be referred to as a vector concatenation submodule, etc., which is not limited in the present disclosure.

Exemplarily, an original feature may be transformed into a high-dimensional sparse binary vector by using a one-hot encoding manner. Exemplarily, a low-dimensional dense vector feature may be obtained by using an embedding-based manner.

Exemplarily, an output of the underlying module 310 may be a concatenated feature, for example, multiple outputs (such as multiple vector features) of the plurality of submodules may be concatenated to obtain the concatenated feature.

In some embodiments, the center branch 320 is also referred to as a center network, and may include a forward neural network. The center branch 320 is a shared network, and each sample will enter the network. Referring to FIG. 3, the center branch 320 may include a shared subnetwork 321 and a forward inference network 322 based on a learn hidden unit contributions (LHUC) structure. For example, the shared subnetwork 321 is shared between the plurality of domains. Exemplarily, the shared subnetwork 321 may be configured to implement feature compression, for example, obtain a compressed feature of, e.g., 512 dimensions based on the concatenated feature, to be input to the network 322. Exemplarily, the network 322 may be implemented as a fully connected neural network, for example, an input is a 512-dimensional feature vector, and an output is 1-dimensional.

In some embodiments, each domain branch 330 is a non-shared network, and only a sample belonging to a corresponding domain will enter the corresponding domain branch. Taking the domain branch 330-1 in FIG. 3 as an example, assuming that the domain branch 330-1 corresponds to a first domain, only a concatenated feature of those samples belonging to the first domain will be input to the domain branch 330-1.

The domain branch 330-1 includes an extraction network 331 and a forward inference network 332. For example, the extraction network 331 may be based on progressive layered extraction (PLE). For example, the forward inference network 332 may be implemented as a fully connected neural network, for example, an input is a 512-dimensional feature vector, and an output is 1-dimensional.

The extraction network 331 may include a compression subnetwork 3311 and a gate subnetwork 3312. The compression subnetwork 3311 may be configured to implement feature compression, for example, obtain a compressed feature of, e.g., 512 dimensions based on the concatenated feature of those samples belonging to the first domain. The gate subnetwork 3312 may obtain a weighted domain embedding feature based on a vector feature from the compression subnetwork 3311 and a vector feature with a same dimension from the shared subnetwork 321. Further, the weighted domain embedding feature may be input to the forward inference network 332 to obtain a one-dimensional output.

Exemplarily, the domain branch 330-1 is described in detail with reference to FIG. 3, but those skilled in the art should understand that other domain branches, such as the domain branches 330-2 to 330-N, also have a similar branch structure, and will not be repeated here for the purpose of simplified illustration.

In some embodiments, a network output of a certain sample may be obtained based on a one-dimensional output of a pre-branch to which the sample belongs and a one-dimensional output of the center branch. For example, assuming that the sample belongs to a domain X (domainX), a first output of the center branch is logit_{center}, and a second output of a domain branch corresponding to the domain X is logit_{domainX}, then the network output may be expressed as: logit_{final}=logit_{center}+logit_{domainX}. In another example, the network output may also be obtained by weighted summation or other methods, which will not be listed here.

In some other embodiments, outputs of the logistic regression submodule 311 and the factorization machine submodule 312 in the underlying module 310 may also be obtained, and the network output is determined further based on the outputs of the logistic regression submodule 311 and the factorization machine submodule 312. For example, a first output of the center branch, a second output of a domain branch corresponding to the domain X, a third output of the logistic regression submodule 311, and a fourth output of the factorization machine submodule 312 may be accumulated to obtain the network output. Optionally, the accumulating manner may be weighted summation or other manners, which is not limited in the present disclosure.

In this way, by inputting each sample in the media information dataset into the multi-domain network model to be trained, a loss function may be constructed based on a difference between each network output of each sample and a corresponding label, and a trained multi-domain network model may be generated through training iteratively.

In this way, the present solution can use the multi-domain network model for a plurality of different domains, and the network model for the plurality of domains can be obtained through one training based on the dataset.

The multi-domain network model in the embodiments of the present disclosure includes the center branch, so that a global perspective can be considered, and complete isolation between different domains can be avoided, the multi-domain network model includes a plurality of domain branches, so that it is more targeted for each domain, so that the multi-domain network model can be more accurately used for multi-domain media information.

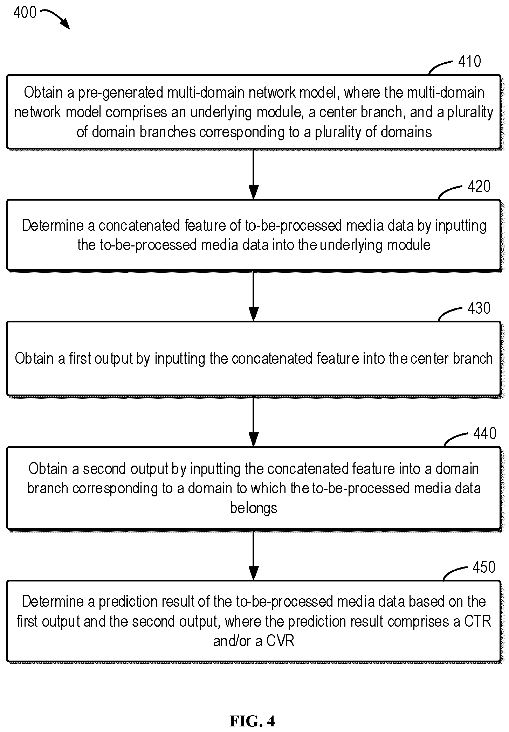

FIG. 4 shows a schematic flowchart of a process 400 of data processing according to some embodiments of the present disclosure. At block 410, a pre-generated multi-domain network model is obtained, where the multi-domain network model includes an underlying module, a center branch, and a plurality of domain branches corresponding to a plurality of domains. At block 420, a concatenated feature of to-be-processed media data is determined by inputting the to-be-processed media data into the underlying module. At block 430, a first output is obtained by inputting the concatenated feature into the center branch. At block 440, a second output is obtained by inputting the concatenated feature into a domain branch corresponding to a domain to which the to-be-processed media data belongs. At block 450, a prediction result of the to-be-processed media data is determined based on the first output and the second output, where the prediction result includes a CTR and/or a CVR.

In some embodiments, the multi-domain network model obtained at block 410 may be the multi-domain network model generated through training, as shown with reference to FIGS. 1-3. As mentioned above, the multi-domain network model includes the underlying module, and the underlying module may include a plurality of submodules. As mentioned above, the multi-domain network model includes the center branch, and for example, may include the shared subnetwork and the forward inference network implemented as the LHUC structure. As mentioned above, the multi-domain network model includes the plurality of domain branches, and for example, each domain branch includes the extraction network and the forward inference network, where the extraction network may include the compression subnetwork and the gate subnetwork.

Exemplarily, the underlying module may include the plurality of submodules, and the to-be-processed media data is input to the underlying module, for example, is input to the plurality of submodules respectively, and a plurality of outputs may be correspondingly obtained. Further, the plurality of outputs may be concatenated to obtain the concatenated feature of the to-be-processed media data.

Exemplarily, the concatenated feature may be input to the center branch (the center branch 320 shown in FIG. 3) and the domain branch corresponding to the domain to which the to-be-processed media data belongs (assumed to be the domain branch 330-1 shown in FIG. 3), respectively. Optionally, the concatenated feature of the to-be-processed media data may be input to the compression subnetwork 3311 of the domain branch 330-1 to obtain a vector feature of, e.g., 512 dimensions. Optionally, the concatenated feature of the to-be-processed media data may be input to the shared subnetwork 321 of the center branch 320 to obtain a vector feature of, e.g., 512 dimensions.

Exemplarily, an output of the shared subnetwork 321 may be used as an input of the forward inference network 322 to obtain the first output.

Exemplarily, an output of the compression subnetwork 3311 and an output of the shared subnetwork 321 may be used as an input of the gate subnetwork 3312, to obtain a weighted domain embedding feature. The weighted domain embedding feature may be used as an input of the forward inference network 332, to obtain the second output.

Optionally, the accumulation (for example, summation) of the first output and the second output is used as the prediction result of the to-be-processed media data. Optionally, a third output of the logistic regression submodule 311 and a fourth output of the factorization machine submodule 312 in the underlying module 310 may also be obtained, and the accumulation (for example, summation) of the first output, the second output, the third output, and the fourth output is used as the prediction result of the to-be-processed media data.

In this way, the embodiments of the present disclosure can use the multi-domain network model to predict and obtain the CTR/CVR. Because the multi-domain network model includes the center branch, a global perspective can be considered, and complete isolation between different domains can be avoided. The multi-domain network model includes a plurality of domain branches, so that the to-be-processed media data only needs to be predicted through the corresponding domain branch, which is more targeted on the one hand and reduces the amount of calculation for processing on the other hand. In this way, the multi-domain network model can be used to determine the CTR/CVR of media data for each domain more accurately and efficiently.

It can be understood that a prediction result (such as the CTR/CVR) can be obtained in the embodiments of the present disclosure, and the prediction result can be used in various use cases, for example, being used for arrangement of media data to achieve fine ranking of the media data; for example, being used for recommendation of media data to achieve more targeted recommendation information, and so on. For example, in a process of advertisement slot placement, a placement manner of each advertisement slot may be determined based on the multi-domain network model in the embodiments of the present disclosure, for example, overall consumption of an advertisement platform can be reduced, and value of an advertiser can be improved. Through testing, the multi-domain network model in the embodiments of the present disclosure can achieve an offline AUC gain when used for a plurality of different domains, for example, increasing by about 0.07%.

It should be understood that in the embodiments of the present disclosure, "first", "second", "third", etc. are only used to indicate that a plurality of objects may be different, but do not exclude the two objects from being the same, and should not be construed as any limitation to the embodiments of the present disclosure.

It should also be understood that the divisions of the manners, the conditions, the categories, and the embodiments in the embodiments of the present disclosure are only for the convenience of description, and should not constitute a special limitation, and features in various manners, categories, conditions, and embodiments may be combined with each other under the condition of conforming to the logic.

It should also be understood that the foregoing descriptions are merely to help those skilled in the art better understand the embodiments of the present disclosure, but are not intended to limit the scope of the embodiments of the present disclosure. Those skilled in the art can make various modifications or changes or combinations according to the foregoing descriptions. Such a modified, changed, or combined solution is also within the scope of the embodiments of the present disclosure.

It should also be understood that the foregoing description focuses on emphasizing the differences between the embodiments, and the same or similar parts may refer to each other or be learned from each other. For the sake of brevity, details are not described herein again.

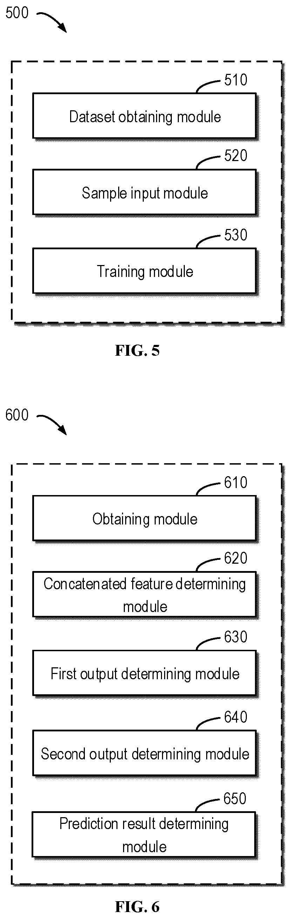

FIG. 5 shows a schematic block diagram of an example apparatus 500 according to some embodiments of the present disclosure. The apparatus 500 may be implemented by software, hardware, or a combination thereof. As shown in FIG. 5, the apparatus 500 includes a dataset obtaining module 510, a sample input module 520, and a training module 530.

The dataset obtaining module 510 is configured to obtain a media information dataset for training, where the dataset includes a plurality of samples, each of the plurality of samples includes a media data sample and a corresponding label, and the label indicates a CTR and/or a CVR.

The sample input module 520 is configured to, for each sample in the dataset: determine a concatenated feature of the sample by inputting the sample into an underlying module of a multi-domain network model, obtain a first output by inputting the concatenated feature of the sample into a center branch of the multi-domain network model, obtain a second output by inputting the concatenated feature of the sample into a domain branch corresponding to a domain to which the sample belongs, and determine a network output of the sample based on the first output and the second output.

The training module 530 is configured to generate the multi-domain network model through training based on the label of each sample in the dataset and the network output of each sample, where the multi-domain network model includes the underlying module, the center branch, and a plurality of domain branches corresponding to a plurality of domains.

In some embodiments, the underlying module includes a logistic regression submodule and a factorization machine submodule. The sample input module 520 is configured to input the sample into the logistic regression submodule and the factorization machine submodule respectively to obtain a third output of the sample and a fourth output of the sample, and where the network output of the sample is determined based on the first output, the second output, the third output, and the fourth output.

In some embodiments, the underlying module includes a plurality of submodules, and the sample input module 520 is configured to input the sample into the plurality of submodules respectively to obtain a plurality of outputs; and obtain the concatenated feature of the sample based on concatenation of the plurality of outputs.

Exemplarily, each domain branch includes an extraction network and a forward inference network, where the extraction network is configured to: obtain a weighted domain embedding feature through a gate subnetwork based on a first input feature input to the domain branch and a second input feature input to the center branch, where the weighted domain embedding feature is an input of the forward inference network.

Optionally, the center branch includes a forward inference network based on an LHUC structure.

The apparatus 500 of FIG. 5 can be used to implement the process described above in conjunction with FIGS. 1-3. For the sake of brevity, details are not described herein again.

FIG. 6 shows a schematic block diagram of an example apparatus 600 according to some embodiments of the present disclosure. The apparatus 600 may be implemented by software, hardware, or a combination thereof. As shown in FIG. 6, the apparatus 600 includes an obtaining module 610, a concatenated feature determining module 620, a first output determining module 630, a second output determining module 640, and a prediction result determining module 650.

The obtaining module 610 is configured to obtain a pre-generated multi-domain network model, where the multi-domain network model includes an underlying module, a center branch, and a plurality of domain branches corresponding to a plurality of domains. The concatenated feature determining module 620 is configured to determine a concatenated feature of to-be-processed media data by inputting the to-be-processed media data into the underlying module. The first output determining module 630 is configured to obtain a first output by inputting the concatenated feature into the center branch. The second output determining module 640 is configured to obtain a second output by inputting the concatenated feature into a domain branch corresponding to a domain to which the to-be-processed media data belongs. The prediction result determining module 650 is configured to determine a prediction result of the to-be-processed media data based on the first output and the second output, where the prediction result includes a CTR and/or a CVR.

In some embodiments, the underlying module includes a logistic regression submodule and a factorization machine submodule. The apparatus 600 may further include an underlying module output determining module, configured to: obtain a third output and a fourth output by inputting the to-be-processed media data into the logistic regression submodule and the factorization machine submodule respectively.

Exemplarily, the prediction result determining module 650 may be configured to determine the prediction result based on the first output, the second output, the third output, and the fourth output.

In some embodiments, the underlying module includes a plurality of submodules, and the concatenated feature determining module 620 includes a plurality of output determining submodules, configured to obtain a plurality of outputs by inputting the to-be-processed media data into the plurality of submodules respectively; and a concatenated feature determining submodule, configured to obtain the concatenated feature based on a concatenation of the plurality of outputs.

Exemplarily, a domain branch corresponding to a domain to which the to-be-processed media data belongs includes an extraction network and a forward inference network, where the extraction network is configured to: obtain a weighted domain embedding feature through a gate subnetwork based on a first input feature input to the domain branch and a second input feature input to the center branch, where the weighted domain embedding feature is an input of the forward inference network.

Optionally, the center branch includes a forward inference network based on an LHUC structure.

The apparatus 600 of FIG. 6 can be used to implement the process described above in conjunction with FIG. 4. For the sake of brevity, details are not described herein again.

The division of modules or units in the embodiments of the present disclosure is schematic, and is only a logical function division. In actual implementation, there may be another division manner. In addition, functional units in the embodiments of the present disclosure may be integrated into one unit, may exist physically alone, or may be integrated into one unit by two or more units. The integrated unit described above may be implemented in the form of hardware, or may be implemented in the form of a software functional unit.

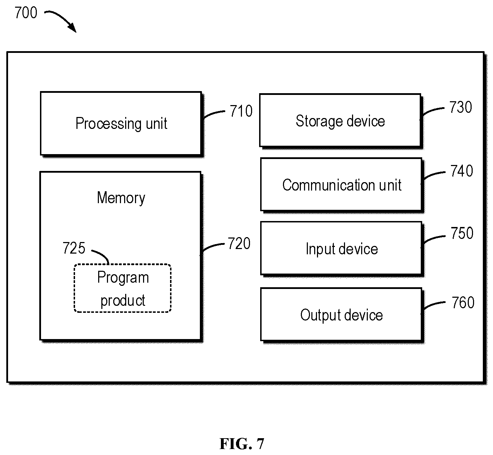

FIG. 7 shows a block diagram of an example device 700 that can be used to implement the embodiments of the present disclosure. It should be understood that the device 700 shown in FIG. 7 is merely exemplary, and should not constitute any limitation to the functions and scope of the implementation described herein. For example, the device 700 may be used to perform the process described in FIGS. 1-4 described above. For example, the device 700 may be implemented as a classical computer and/or a quantum computer.

As shown in FIG. 7, the device 700 is in the form of a general-purpose computing device. Components of the computing device 700 may include, but are not limited to, one or more processors or processing units 710, a memory 720, a storage device 730, one or more communication units 740, one or more input devices 750, and one or more output devices 760. The processing unit 710 may be a physical or virtual processor and can execute various processes in accordance with a program stored in the memory 720. In a multi-processor system, a plurality of processing units execute computer-executable instructions in parallel to improve parallel processing capability of the computing device 700.

The computing device 700 typically includes a plurality of computer storage media. Such media may be any available media accessible by the computing device 700, including but not limited to volatile and non-volatile media, and detachable and non-detachable media. The memory 720 may be a volatile memory (for example, a register, a cache, a random access memory (RAM)), a non-volatile memory (for example, a read-only memory (ROM), an electrically erasable programmable read-only memory (EEPROM), a flash memory), or some combination thereof. The storage device 730 may be a detachable or non-detachable medium, and may include a machine-readable medium, such as a flash drive, a disk, or any other medium, which can be used to store information and/or data (for example, training data for training) and can be accessed within the computing device 700.

The computing device 700 may further include additional detachable/non-detachable, volatile/non-volatile storage media. Although not shown in FIG. 7, a disk drive for reading from or writing to a detachable, non-volatile disk (such as a "floppy disk") and an optical disk drive for reading from or writing to a detachable, non-volatile optical disk can be provided. In these cases, each drive can be connected to a bus (not shown) through one or more data medium interfaces. The memory 720 may include a computer program product 725, which has one or more program modules configured to perform various methods or actions of various implementations of the present disclosure.

The communication unit 740 communicates with another computing device through a communication medium. Additionally, functions of components of the computing device 700 may be implemented by a single computing cluster or a plurality of computing machines, and the computing machines can communicate through a communication connection. Therefore, the computing device 700 may operate in a networked environment using a logical connection to one or more other servers, network personal computers (PCs), or another network node.

The input device 750 may be one or more input devices, such as a mouse, a keyboard, a trackball, and the like. The output device 760 may be one or more output devices, such as a display, a speaker, a printer, and the like. The computing device 700 may also communicate with one or more external devices (not shown) through the communication unit 740 as required, for example, a storage device, a display device, etc., communicate with one or more devices that enable a user to interact with the computing device 700, or communicate with any device (such as a network card, a modem, etc.) that enables the computing device 700 to communicate with one or more other computing devices. Such communication may be performed via an input/output (I/O) interface (not shown).

According to an example implementation of the present disclosure, there is provided a computer-readable storage medium having stored thereon computer-executable instructions, where the computer-executable instructions are executed by a processor to implement the method described above. According to an example implementation of the present disclosure, there is further provided a computer program product, where the computer program product is tangibly stored on a non-transitory computer-readable medium and includes computer-executable instructions, and the computer-executable instructions are executed by a processor to implement the method described above. According to an example implementation of the present disclosure, there is provided a computer program product having a computer program stored thereon, where the program, when executed by a processor, implements the method described above.

Various aspects of the present disclosure are described here with reference to the flowcharts and/or block diagrams of the method, the apparatus, the device, and the computer program product implemented in accordance with the present disclosure. It should be understood that each block of the flowcharts and/or the block diagrams and a combination of the blocks in the flowcharts and/or the block diagrams may be implemented by computer-readable program instructions.

These computer-readable program instructions may be provided to a processing unit of a general-purpose computer, a special-purpose computer, or another programmable data processing apparatus to produce a machine, such that the instructions, when executed by the processing unit of the computer or another programmable data processing apparatus, create an apparatus for implementing the functions/acts specified in one or more blocks in the flowcharts and/or the block diagrams. These computer-readable program instructions may alternatively be stored in a computer-readable storage medium. These instructions enable a computer, a programmable data processing apparatus, and/or another device to work in a specific manner. Therefore, the computer-readable medium storing the instructions includes a product manufactured, which includes instructions for implementing various aspects of the functions/acts specified in one or more blocks in the flowcharts and/or the block diagrams.

The computer-readable program instructions may be loaded onto a computer, another programmable data processing apparatus, or another device, such that a series of operation steps are performed on the computer, the another programmable data processing apparatus, or the another device, to produce a computer-implemented process, such that the instructions executed on the computer, the another programmable data processing apparatus, or the another device implement the functions/acts specified in one or more blocks in the flowcharts and/or the block diagrams.

The flowcharts and the block diagrams in the accompanying drawings illustrate possibly implemented system architectures, functions, and operations of the method and the computer program product according to a plurality of implementations of the present disclosure. In this regard, each block in the flowchart or the block diagram may represent a part of a module, program segment, or instruction, and the part of the module, program segment, or instruction contains one or more executable instructions for implementing the specified logical functions. In some alternative implementations, the functions marked in the blocks may also occur in an order different from that marked in the accompanying drawings. For example, two consecutive blocks may actually be performed substantially in parallel, or they may sometimes be performed in a reverse order, depending on a function involved. It should also be noted that each block in the block diagram and/or the flowchart, and a combination of the blocks in the block diagram and/or the flowchart may be implemented by a dedicated hardware-based system that executes specified functions or acts, or may be implemented by a combination of dedicated hardware and computer instructions.

The foregoing descriptions of the implementations of the present disclosure have been provided for the purpose of illustration, and are not exhaustive, nor are the implementations disclosed limited to the precise forms disclosed. A great number of modifications and variations are apparent to a person skilled in the art without departing from the scope and spirit of the implementations described. The selection of the terms used herein is intended to best explain the principles, the practical application, or the technical improvements in the market of the implementations, or to enable a person skilled in the art to understand the implementations disclosed herein.

## Claims

1. A data processing method, comprising:
obtaining a pre-generated multi-domain network model, wherein the multi-domain network model comprises an underlying module, a center branch, and a plurality of domain branches corresponding to a plurality of domains;
determining a concatenated feature of to-be-processed media data by inputting the to-be-processed media data into the underlying module;
obtaining a first output by inputting the concatenated feature into the center branch;
obtaining a second output by inputting the concatenated feature into a domain branch corresponding to a domain to which the to-be-processed media data belongs; and
determining a prediction result of the to-be-processed media data based on the first output and the second output, wherein the prediction result comprises a click-through rate (CTR) and/or a conversion rate (CVR).

2. The method according to claim 1, wherein the underlying module comprises a logistic regression submodule and a factorization machine submodule, and the method further comprises:
obtaining a third output and a fourth output by inputting the to-be-processed media data into the logistic regression submodule and the factorization machine submodule respectively.

3. The method according to claim 2, wherein determining the prediction result of the to-be-processed media data comprises:
determining the prediction result based on the first output, the second output, the third output, and the fourth output.

4. The method according to claim 1, wherein the underlying module comprises a plurality of submodules, and wherein determining the concatenated feature of the to-be-processed media data comprises:
obtaining a plurality of outputs by inputting the to-be-processed media data into the plurality of submodules respectively; and
obtaining the concatenated feature based on a concatenation of the plurality of outputs.

5. The method according to claim 1, wherein a domain branch corresponding to a domain to which the to-be-processed media data belongs comprises an extraction network and a forward inference network, wherein the extraction network is configured to:
obtain a weighted domain embedding feature through a gate subnetwork based on a first input feature input to the domain branch and a second input feature input to the center branch, wherein the weighted domain embedding feature is an input of the forward inference network.

6. The method according to claim 1, wherein the center branch comprises a forward inference network based on a learn hidden unit contributions (LHUC) structure.

7. A model training method, comprising:
obtaining a media information dataset for training, wherein the dataset comprises a plurality of samples, each of the plurality of samples comprises a media data sample and a corresponding label, and the label indicates a click-through rate (CTR) and/or a conversion rate (CVR);
for each sample in the dataset:
determining a concatenated feature of the sample by inputting the sample into an underlying module of a multi-domain network model,
obtaining a first output by inputting the concatenated feature of the sample into a center branch of the multi-domain network model,
obtaining a second output by inputting the concatenated feature of the sample into a domain branch corresponding to a domain to which the sample belongs, and
determining a network output of the sample based on the first output and the second output; and
generating the multi-domain network model through training based on the label of each sample in the dataset and the network output of each sample, wherein the multi-domain network model comprises the underlying module, the center branch, and a plurality of domain branches corresponding to a plurality of domains.

8. The method according to claim 7, wherein the underlying module comprises a logistic regression submodule and a factorization machine submodule, and the method further comprises:
obtaining a third output and a fourth output of the sample by inputting the sample into the logistic regression submodule and the factorization machine submodule respectively,
and wherein the network output of the sample is determined based on the first output, the second output, the third output, and the fourth output.

9. The method according to claim 7, wherein the underlying module comprises a plurality of submodules, and wherein determining the concatenated feature of the sample comprises:
obtaining a plurality of outputs by inputting the sample into the plurality of submodules respectively; and
obtaining the concatenated feature of the sample based on a concatenation of the plurality of outputs.

10. The method according to claim 7, wherein each domain branch comprises an extraction network and a forward inference network, wherein the extraction network is configured to:
obtain a weighted domain embedding feature through a gate subnetwork based on a first input feature input to the domain branch and a second input feature input to the center branch, wherein the weighted domain embedding feature is an input of the forward inference network.

11. The method according to claim 7, wherein the center branch comprises a forward inference network based on a learn hidden unit contributions (LHUC) structure.

12. An electronic device, comprising:
at least one processing unit; and
at least one memory coupled to the at least one processing unit and storing instructions executable by the at least one processing unit, the instructions, when executed by the at least one processing unit, causing the electronic device to perform acts, the acts comprising:
obtaining a pre-generated multi-domain network model, wherein the multi-domain network model comprises an underlying module, a center branch, and a plurality of domain branches corresponding to a plurality of domains;
determining a concatenated feature of to-be-processed media data by inputting the to-be-processed media data into the underlying module;
obtaining a first output by inputting the concatenated feature into the center branch;
obtaining a second output by inputting the concatenated feature into a domain branch corresponding to a domain to which the to-be-processed media data belongs; and
determining a prediction result of the to-be-processed media data based on the first output and the second output, wherein the prediction result comprises a click-through rate (CTR) and/or a conversion rate (CVR).

13. An electronic device, comprising:
at least one processing unit; and
at least one memory coupled to the at least one processing unit and storing instructions executable by the at least one processing unit, the instructions, when executed by the at least one processing unit, causing the electronic device to perform acts, the acts comprising:
obtaining a media information dataset for training, wherein the dataset comprises a plurality of samples, each of the plurality of samples comprises a media data sample and a corresponding label, and the label indicates a click-through rate (CTR) and/or a conversion rate (CVR);
for each sample in the dataset:
determining a concatenated feature of the sample by inputting the sample into an underlying module of a multi-domain network model,
obtaining a first output by inputting the concatenated feature of the sample into a center branch of the multi-domain network model,
obtaining a second output by inputting the concatenated feature of the sample into a domain branch corresponding to a domain to which the sample belongs, and
determining a network output of the sample based on the first output and the second output; and
generating the multi-domain network model through training based on the label of each sample in the dataset and the network output of each sample, wherein the multi-domain network model comprises the underlying module, the center branch, and a plurality of domain branches corresponding to a plurality of domains.

14. A data processing apparatus, comprising:
an obtaining module, configured to obtain a pre-generated multi-domain network model, wherein the multi-domain network model comprises an underlying module, a center branch, and a plurality of domain branches corresponding to a plurality of domains;
a concatenated feature determining module, configured to determine a concatenated feature of to-be-processed media data by inputting the to-be-processed media data into the underlying module;
a first output determining module, configured to obtain a first output by inputting the concatenated feature into the center branch;
a second output determining module, configured to obtain a second output by inputting the concatenated feature into a domain branch corresponding to a domain to which the to-be-processed media data belongs; and
a prediction result determining module, configured to determine a prediction result of the to-be-processed media data based on the first output and the second output, wherein the prediction result comprises a click-through rate (CTR) and/or a conversion rate (CVR).

15. A model training apparatus, comprising:
a dataset obtaining module, configured to obtain a media information dataset for training, wherein the dataset comprises a plurality of samples, each of the plurality of samples comprises a media data sample and a corresponding label, and the label indicates a click-through rate (CTR) and/or a conversion rate (CVR);
a sample input module, configured to, for each sample in the dataset:
determine a concatenated feature of the sample by inputting the sample into an underlying module of a multi-domain network model,
obtain a first output by inputting the concatenated feature of the sample into a center branch of the multi-domain network model,
obtain a second output by inputting the concatenated feature of the sample into a domain branch corresponding to a domain to which the sample belongs, and
determine a network output of the sample based on the first output and the second output; and
a training module, configured to generate the multi-domain network model through training based on the label of each sample in the dataset and the network output of each sample, wherein the multi-domain network model comprises the underlying module, the center branch, and a plurality of domain branches corresponding to a plurality of domains.

16. A computer-readable storage medium having stored thereon a computer program that, when executed by a processor, implements a method according to any one of claims 1 to 11.

17. A computer program product having stored thereon a computer program that, when executed by a processor, implements a method according to any one of claims 1 to 11.
